# EUROPÄISCHE PATENTSCHRIFT

(11) **EP 1 077 864 B1**
(45) Veröffentlichungstag und Bekanntmachung des Hinweises auf die Patenterteilung: **09.04.2003**
(21) Anmeldenummer: 99926346.0
(22) Anmeldetag: 20.05.1999
(51) Int. Cl.: B62D 15/02

(54) **BEFESTIGUNG EINES LENKWINKELSENSORS**
FIXING OF A STEERING-ANGLE SENSOR
FIXATION D'UN CAPTEUR D'ANGLE DE DIRECTION

(30) Priorität: 20.05.1998 DE 19822815
(43) Veröffentlichungstag der Anmeldung: 28.02.2001
(73) Patentinhaber: Continental Teves AG & Co. oHG, 60488 Frankfurt (DE)
(72) Erfinder: VOLZ, Peter, D-64291 Darmstadt (DE); BURGDORF, Jochen, D-63075 Offenbach (DE)
(86) Internationale Anmeldenummer: EP9903472
(87) Internationale Veröffentlichungsnummer: WO99059861

(56) Entgegenhaltungen:
- US-A- 5 002 404

## Beschreibung

Die vorliegende Erfindung betrifft eine Befestigung eines Lenkwinkelsensors in einem Fahrzeug gemäß dem Oberbegriff des Patentanspruchs 1.

Eine derartige Befestigung ist beispielsweise aus der US 5,002,404 A bekannt, die insbesondere in Fig. 2 eine Befestigung eines Lenkwinkelsensors in einem Fahrzeug mit einer Lenksäule und einer darin drehbar gelagerten Lenkspindel offenbart, wobei ein Sensorgehäuse im Bereich der Lenkspindellagerung drehfest gehalten ist.

Der prinzipielle Aufbau von Lenkwinkelsensoren (LWS) ist auch aus der DE 196 01 964 A1 bekannt.

In Systemen zur Regelung der Fahrzeugdynamik, insbesondere Regelung des Gierwinkels (in ESP-Programmen), muß der Lenkwinkel sehr exakt und fehlerfrei erfaßt werden. In der Regel können die Lenksäulen und Lenkwinkelsensoranbindung nicht in der gewünschten Präzision gefertigt werden. Gründe hierfür sind: Kosten, radiale Verstellung der Lenkräder, axiale Verstellung der Lenkräder, Klemmfunktion der Verstellung, Einbautoleranzen im Fahrzeug, Lenkungskräfte verursachen elastische Verformungen.

Es ist deshalb die Aufgabe der vorliegenden Erfindung, eine Befestigung eines Lenkwinkelsensors anzugeben, bei der trotz der oben gestellten Anforderungen eine exakte Zuordnung der Rotationsachsen von Welle und Sensor unter allen Betriebsbedingungen eingehalten werden kann.

Diese Aufgabe wird durch die in Anspruch 1 angegebene Merkmalskombination gelöst. Das Prinzip der Erfindung besteht im wesentlichen darin, daß die Mittelachse des Sensorgehäuses und die Rotationsachse der Lenkspindel im Sensorbereich genau zusammenfallen, wobei das Sensorgehäuse in der Querebene zur Rotationsachse der Lenkspindel bewegbar angeordnet ist. Auf diese Weise verlieren Einflüsse, die einen "Versatz" des Lenkspindellagers und damit der Rotationsachse der Lenkspindel gegenüber dem Sensorgehäuse bewirken, ihren Einfluß, da mit dem Versatz der Rotationsachse auch die Lage des Sensorgehäuses entsprechend verschoben wird. Entsprechendes gilt auch für den Mitnehmer, der mit dem Versatz der Rotationsachse ebenfalls entsprechend verschoben wird und damit seine lagerichtige Zuordnung zu dem Sensorgehäuse behält. Im Gegensatz hierzu sind bei den bisherigen Vorschlägen die Sensorgehäuse fest mit dem Fahrzeugchassis verbunden, so daß eine Bewegung der Rotations- bzw. Spindelachse gegenüber der Mittenachse des Sensorgehäuses zu Fehlmessungen oder gar zur Beschädigung des Sensors führen konnten.

Eine besonders enge Anbindung des Sensorgehäuses an die Lage der Lenkspindel erhält man durch Anwendung der Merkmalskombination nach Anspruch 2. Dies kommt daher, daß die Außenschale des Rollenlagers in der Regel nur sehr geringe Toleranzen gegenüber der Innenschale und damit der Lage der Lenkspindel bzw. Welle aufweist. Da die äußere Lagerschale und somit auch das Sensorgehäuse der Radialbewegung der Rotations- bzw. Spindelachse präzise folgt, haben die möglichen Taumelbewegungen der Spindel keinen Einfluß auf die Lage des Sensors gegenüber der Spindel.

Hinsichtlich der Befestigung des Sensors bzw. des Sensorgehäuses an der äußeren Lagerschale kann diese mittels eines Befestigungselementes geschehen, welches fest auf der äußeren Lagerschale sitzt oder mit dieser lösbar verbunden ist. Das Befestigungselement kann aber auch einstückig mit der äußeren Lagerschale verbunden sein, so daß die äußere Lagerschale gleichzeitig auch das Verbindungsglied zu dem Sensorgehäuse darstellt.

Besondere Vorteile der Erfindung ergeben sich durch Anwendung der Merkmale nach Anspruch 3. Wird nämlich der Kipplagerbock um einen Drehpunkt verdreht, wird dabei auch gleichzeitig der kippbare Teil der Lenkspindel mitverschwenkt, so daß sich an der Lage des Sensorgehäuses gegenüber der Spindel bzw. Welle nichts ändert.

Für die Erfindung besonders vorteilhaft ist, daß die erfindungsgemäße Befestigung gleichzeitig auch als Befestigungselement für die Anpassung des Sensorgehäuses an die Lenkspindel verwendet werden kann. Hierzu wird empfohlen, das Lenksensorgehäuse lösbar mit dem Befestigungselement zu verbinden, so daß in einfacher Weise im Bedarfsfalle das Gehäuse ausgewechselt werden kann oder an veränderte Verhältnisse angepaßt werden kann.

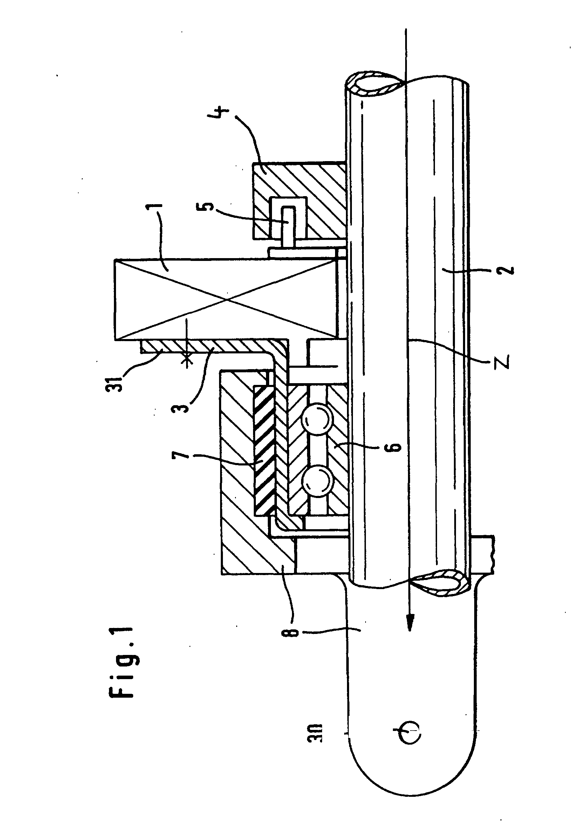

Entsprechend der Merkmalskombination nach Anspruch 6 empfiehlt sich für den Aufbau des Befestigungselementes eine Konstruktion, die im wesentlichen aus einer zylinderförmigen Hülse besteht, welche auf die Außenschale des Rollenlagers aufgebracht, beispielsweise aufgepreßt, oder in anderer Weise lösbar bzw. unlösbar verbunden ist. An die zylinderförmige Wand schließt sich in radialer Richtung erstreckend ein im wesentlichen ringscheibenförmiger Vorsprung an, an dem sich dann das Sensorgehäuse befestigen läßt. Das Rollenlager bzw. Wälzlager sollte bevorzugt kippsteif ausgeführt sein, so daß ein Kippen der äußeren Lagerschale gegenüber der inneren Lagerschale und damit der Spindel auf jeden Fall verhindert wird. Dies kann durch die Verwendung mehrerer paralleler Kugeln (siehe Fig. 1) oder langer zylinderförmiger Wälzkörper oder andere bekannte Anordnungen geschehen.

Hinsichtlich der Verbindung zwischen der äußeren Lagerschale und dem Sensorgehäuse empfiehlt sich die in Anspruch 5 aufgeführte Merkmalskombination. Der Befestigungselement wirkt somit als ein schon weiter oben erläutertes Verbindungsglied, wobei das Befestigungselement einstückig mit der äußeren Lagerschale verbunden sein kann bzw. die äußere Lagerschale als Befestigungselement aus dem Lager herausgeführt ist. Das Befestigungselement kann, wie weiter oben schon erläutert, aber auch einstückig mit der äußeren Lagerschale verbunden sein. Bei der Befestigung des Sensorgehäuses am Befestigungselement sollte darauf geachtet werden, daß vor dem Befestigungsvorgang das Sensorgehäuse gegenüber der Lenkspindelachse zentrisch ausgerichtet bzw. justiert werden kann. Dies kann beispielsweise durch eine lösbare Verbindung geschehen, die in der Querebene zur Längsachse der Spindel eine gewisse Bewegungsfreiheit des Gehäuses gegenüber der Spindelachse vor dem Fixierungsvorgang erlaubt, etwa durch eine hinreichend große Ausgestaltung der Befestigungslöcher.

Hinsichtlich der vorbeschriebenen Merkmale wurde im wesentlichen davon ausgegangen, daß das Befestigungselement bzw. Winkelelement gegenüber der äußeren Lagerschale des Lagers und das Sensorgehäuse wiederum gegenüber dem Winkelelement starr verbunden ist.

Eine Weiterbildung der Erfindung läßt sich durch Anwendung der Merkmale nach Anspruch 7 erreichen. Danach ist das Sensorgehäuse in der Querebene zur Spindelachse vorzugsweise gegenüber dem Kipplagerbock drehfest gelagert. Dies kann beispielsweise durch in radiale Richtung weisende Nuten an dem in radialer Richtung sich erstreckenden Vorsprung des Befestigungs- bzw. Winkelelements geschehen, in welches entsprechende Vorsprünge am Sensorgehäuse ragen. In diesem Fall muß allerdings darauf geachtet werden, daß das Sensorgehäuse in radialer Richtung gegenüber der Spindeloberfläche bzw. der Spindelachse abgestützt ist, so daß das Gehäuse den Unwuchtbewegungen der Spindel folgen kann.

Die Abstützung kann beispielsweise gemäß der Merkmalskombination nach Anspruch 8 durch ein geeignetes Lager geschehen, dessen äußerer Lagerring am Sensorgehäuse angreift. Weiterhin ist darauf zu achten, daß das Gehäuse in Längsrichtung der Rotations- bzw. Spindelsachse gegenüber dem Kipplagerbock gesichert werden muß. Diese Sicherung kann beispielsweise durch eine Feder geschehen, die das Sensorgehäuse in Richtung zum Kipplagerbock hin durch eine Federkraft beaufschlagt. Aber auch andere Halteelemente, beispielsweise Bleche, die eine gewisse Beweglichkeit des Sensorgehäuses gegenüber dem Kipplagerbock gestatten, können eingesetzt werden. Es ist allerdings nicht notwendig, daß das als Befestigungselement wirkende Winkelelement starr mit dem Außenring des Kipplagerbocks verbunden ist. Es ist auch möglich, daß das Sensorgehäuse in der radialen Ebene gegenüber der zugewandten radialen Oberfläche des Kipplagerbocks in hinreichendem Umfang verschiebbar ist, also zumindest in der X-Achse, möglicherweise aber auch in der Y-Achse. An der drehstarren Verbindung zwischen Sensorgehäuse und Kipplagerbock darf sich dabei aber nichts ändern. Eine derartige Konstruktion ist insbesondere dann geeignet, wenn der äußere Gehäuseteil des Kipplagerbocks gegenüber dem eigentlichen Wälzlager durch Gummieinlagen abgefedert ist, so daß sich die Spindel gegenüber dem Kipplagerbock bewegt. Dies ist aber keine Notwendigkeit für die Zweckmäßigkeit der zuletzt erläuterten Konstruktion.

Wie bereits erläutert, können die Führungsnuten für das Sensorgehäuse sowohl in die radiale Außenfläche des Gehäuses selbst als auch in den radialen Vorsprung des Winkelelements bzw. Befestigungselements eingefügt sein. Es kann aber auch eine spezielle Adapterscheibe eingesetzt werden, welche einerseits mit dem Sensorgehäuse verbunden und andererseits gegenüber der Radialfläche des Kipplagerbocks verschiebbar ist. Bei einer derartigen Konstruktion empfiehlt sich in Weiterbildung die Merkmalskombination nach Anspruch 12. Hierbei ist nämlich auch das Gehäuse gegenüber der Adapterscheibe in radialer Richtung verschiebbar, wobei die beiden Verschiebungsrichtungen zwischen dem Kipplagerbock und dem Sensorgehäuse jeweils gegenüber der Adapterscheibe in der Radialebene senkrecht zueinander stehen. Hierdurch ist das Sensorgehäuse gegenüber dem Kipplagerbock in der Radialebene in zwei Richtungen (X-Richtung und Y-Richtung) verschiebbar und gleichwohl gegenüber dem Kipplagerbock drehfest angeordnet.

Der Aufbau des Mitnehmers trägt dazu bei, einem Schlag in der Lenkspindel bzw. einem radialen Versatz des Gehäuses die Wirkung zu nehmen.

Ausführungsbeispiele der Erfindung werden nachfolgend anhand der Zeichnungen erläutert.

In den Zeichnungen zeigen:
- Fig. 1: in geschnittener und auszugsweiser Darstellung ein erstes Ausführungsbeispiel der Befestigung des Sensors am Lager,
- Fig. 2: auszugsweise eine zweite Ausführungsform, bei der das Befestigungselement bzw. Winkelelement einstükkig mit der äußeren Lagerschale vereint ist, wobei das Befestigungselement an der inneren Mantelfläche des Sensorgehäuses angreift,
- Fig. 3: eine Ausführungsform gemäß Fig 2, bei dem das Befestigungselement einen radialen Ansatz aufweist, an dem der Sensor befestigt ist,
- Fig. 4: eine Lagerabstützung des Sensors gegenüber der Spindel mit direkter Kraftübertragung zwischen den Gehäusen von Kipplagerbock und Sensor,
- Fig. 5: eine Draufsicht auf den Kippplagerbock von dem Sensor her gesehen mit einer Nutführung in x-Richtung für das Sensorgehäuse,
- Fig. 6: eine Adapterscheibe mit Vorsprüngen, die eine Bewegbarkeit dieser Scheibe in x-Richtung gegenüber dem Kipplagerbock gestatten,
- Fig. 7: eine Seitenansicht der Adapterscheibe nach Fig. 6,
- Fig. 8: auszugsweise einen Sensor mit einer zum Betrachter hinweisenden Führung in y-Richtung des Sensors gegenüber der Adapterscheibe und
- Fig. 9: auszugsweise eine Draufsicht auf den Sensor gemäß Fig. 8.

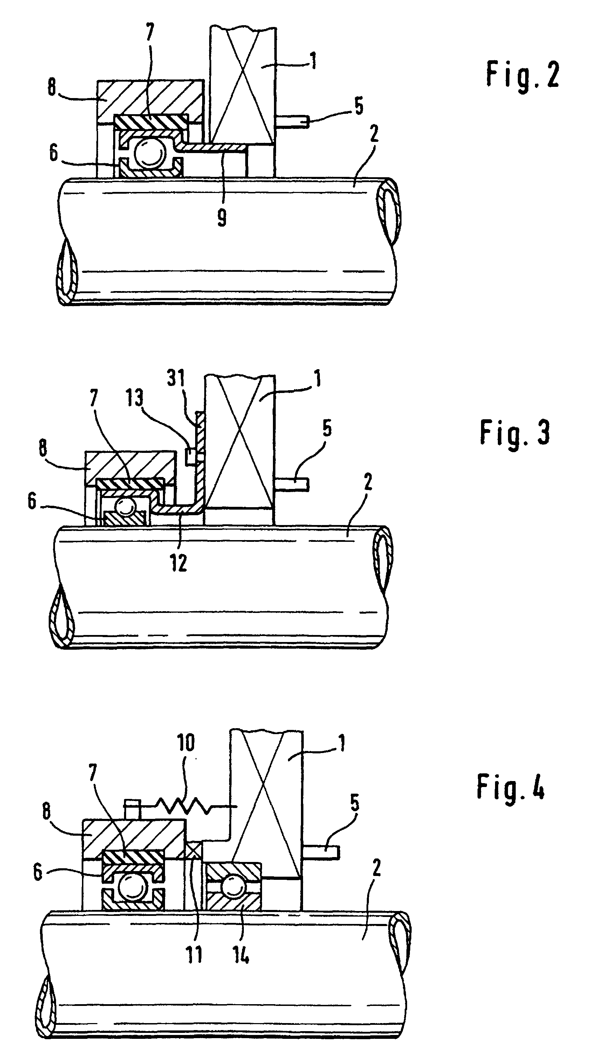

Abbildung 1 zeigt im Halbschnitt die prinzipielle Anordnung. Der Drehwinkel der Welle bzw. Lenkspindel 2 um eine Rotationsachse Z soll von einem Sensor erfaßt werden. Ein Sensorgehäuse 1 des Sensors ist an einem Befestigungselement 3 zentriert-und befestigt. Das Befestigungselement 3 stützt sich auf einem Kugellager 6 ab bzw. ist, wie Abbildung 2 und 3 zeigen, integraler Bestandteil des Lagers 6.

Der Außenring des Kugellagers 6 bzw. des Befestigungselements 3 ist über einen elastischen Toleranzausgleichsring 7 aus Elastomer oder Gummi mit einem Kipplagerbock 8 an der Lenksäule fixiert. Der Drehwinkel der Lenkspindel 2 wird über einem Mitnehmer 4 auf einem Führungsstift 5 und schließlich auf eine Encoderscheibe des Sensors übertragen. Durch den beschriebenen Aufbau ist sichergestellt, daß der Drehwinkel der Welle 2 trotz geometrischer Mißweisung der mechanischen Bauteile exakt an dem Encoder des Sensors abgebildet wird.

Abbildung 4 zeigt eine weitere Variante, bei der die rotatorische Mißweisung durch ein zweites Kugellager 14 ausgeglichen wird. Die drehsichere axiale Ankoppelung an den Kipplagerbock 8 erfolgt über eine Arretierung 11 in Axialund Umfangsrichtung, wobei die Axialkräfte über elastische Anbindungen 10 realisiert sind.

In den Abbildungen 2 und 3 sind Abwandlungen des Ausführungsbeispiels nach Figur 1 gezeigt. In Figur 2 ist das als Verbindungseinrichtung wirkende Befestigungselement 3 einstückig mit der äußeren Lagerschale des Kugellagers 6 vereint, so daß der Außenring des Käfigs mit einem Flansch 9 versehen ist, an den das Sensorgehäuse 1 lösbar oder unlösbar befestigt werden kann. Figur 3 weicht von Figur 2 im wesentlichen dadurch ab, daß der Flansch 9 durch einen Axialflansch 12 ersetzt wurde, welcher sich in radialer Richtung erstreckt. Im übrigen können die gleichen Verhältnisse, wie in Zusammenhang mit Figur 1 beschrieben, herrschen. Die Fixierung am Fixierungspunkt 13 erfolgt ebenfalls vorzugsweise lösbar, wobei eine Justierung des Sensors möglich sein sollte, kann aber auch unlösbar gestaltet werden. Hinsichtlich des Prinzips des Lenkwinkelsensors ist zu bemerken, daß das Gehäuse 1 gegenüber dem Kipplagerbock 8 festgehalten wird, während sich der auf der Lenkspindel 2 befestigte Mitnehmer mit der Lenkspindel 2 dreht. Der Mitnehmer 4 besitzt eine nutförmige Ausnehmung, in die ein Führungsstift bzw. Mitnahmezapfen 5 ragt. Über den Mitnahmezapfen 5 wird ein Meßelement in Drehbewegung versetzt, welches innerhalb des Sensorgehäuses 1 drehbar gelagert ist. Über gegen das Sensorgehäuse 1 feste Meßsonden läßt sich über die Drehbewegung bzw. die Drehlage des Meßelementes der Lenkwinkel der Lenkspindel 2 bzw. die Lenkwinkelgeschwindigkeit bestimmen.

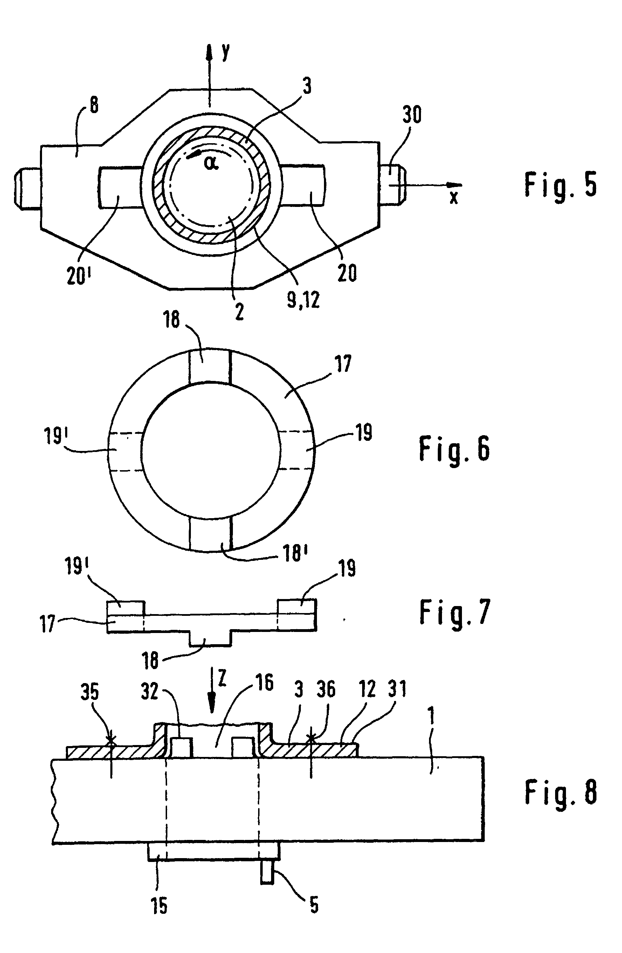

In Figur 5 ist eine Draufsicht auf den Kipplagerbock 8 von dem Sensor her gesehen dargestellt. Der Kipplagerbock 8 besitzt zwei vorspringende Drehbolzen 30 (die auch in Figur 1 angedeutet sind), die auf einer gemeinsamen x-Achse liegen, um welche der Kipplagerbock 8 schwenkbar ist. Durch die Innenausnehmung des Kipplagerbocks 8 ragt die Lenkspindel bzw. Welle 2, die von dem in Figur 2 bzw. 3 dargestellten Befestigungselement 3 umfaßt wird. Das Befestigungselement 3 besitzt einen ringförmig aus dem Gehäuse des Kipplagerbocks 8 vorspringenden Flansch 9 bzw. 12, der in Figur 5 geschnitten dargestellt ist. An dem in radialer Richtung sich erstreckenden Vorsprung 31 des Flansches kann, wie aus Figur 8 und 3 ersichtlich, das Sensorgehäuse 1 zentriert befestigt werden. Die Konfigurationen nach Figur 2 und 3 setzen eine verdrehsichere Befestigung des Befestigungselements 3 gegenüber dem Gehäuse des Kipplagerbocks 8 voraus, was mit Hilfe der von dem elastischen Toleranzausgleichsring 7 ausgeübten Reibkräfte erreicht werden kann. Es wird somit eine verdrehsichere Gummianbindung zwischen Befestigungselement 3 und Kipplagerbock 8 vorausgesetzt. Eine solche verdrehsichere Verbindung ist nicht immer kostengünstig über die Fahrzeuglebensdauer zu realisieren. Auch ist eine solche Gummiverbindung nicht besonders verdrehsteif, da der Toleranzausgleichsring 7 ja eine radiale Auslenkung der Welle 2 zulassen muß.

Die Figuren 5 bis 8 zeigen daher eine in Umfangsrichtung formschlüssige Verbindung zwischen dem Kipplagerbock 8 und dem Sensorgehäuse 1 bzw. dem Befestigungselement 3 über eine Adapterscheibe bzw. Zwischenführung 17, wie sie in den Figuren 6 und 7 dargestellt ist. Diese Zwischenführung bzw. Adapterscheibe 17 ist insbesondere dann von großem Vorteil, wenn das Befestigungselement 3 gegenüber dem Gehäuse des Kipplagerbocks 8 verdrehbar ist, z.B. durch Weglassen des Toleranzausgleichsringes 7 in Figur 1 bis Figur 4. Um eine Drehfestigkeit zwischen Sensorgehäuse 1 und Kipplagerbockgehäuse zu erreichen, sorgt die Adapterscheibe 17 zwar für eine Verschiebbarkeit des Sensors in x- und y-Richtung gegenüber dem Kipplagerbock 8, wobei aber gleichzeitig ein Verdrehen des Sensors gegenüber dem Gehäuse des Kipplagerbocks 8 nicht möglich ist. Dies wird im einzelnen dadurch erreicht, daß die Adapterscheibe 17 mit Führungsvorsprüngen 19 versehen sind, welche eine Bewegung der Scheibe 17 in x-Richtung gegenüber dem Gehäuse des Kipplagerbocks 8 gestatten, indem sie in zugeordneten Führungsnuten 20 des Lagerbocks 8 um einen geeigneten Weg in x-Richtung verschiebbar sind. Ein Verdrehen der Adapterscheibe 17 gegenüber dem Gehäuse des Kipplagerbocks 8 ist aber nicht möglich.

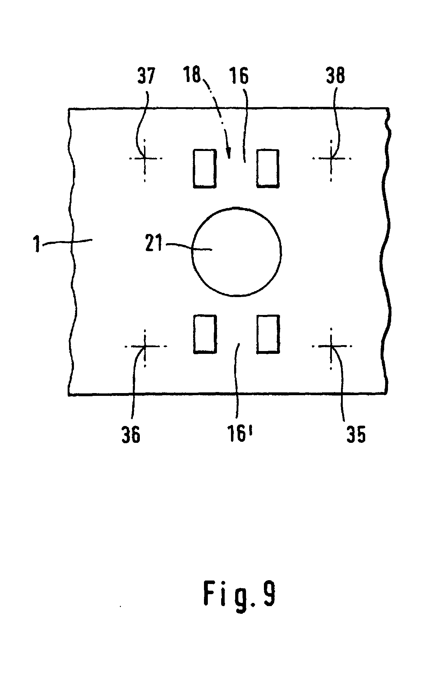

Andererseits gestattet wiederum ein Führungsansatz 18 an der Adapterscheibe 17, der in einer zugeordneten nutenartigen Führungsausnehmung 16 des Sensorsgehäuses 1 gleitet, eine Bewegung des Sensors in y-Richtung gegenüber dem Gehäuse des Kipplagerbocks 8, wobei wiederum eine Drehbewegung verhindert ist. Im Ergebnis ist also der Sensor in Grenzen gegenüber dem Kipplagerbock 8 in der Radialebene zur Spindel in x- und y-Richtung verschiebbar, nicht aber verdrehbar. Die Drehsicherung wird somit anstatt der Reibkräfte des elastischen Toleranzausgleichsringes 7 mit Hilfe der Adapterscheibe 17 erreicht. Es ist allerdings nicht zwingend notwendig, die Führungsausnehmung 16 im Gehäuse 1 des Sensors, wie in Figur 8 und 9 gezeigt, auszubilden. Vielmehr kann die Führungsausnehmung auch in den radialen Vorsprung 31 eingearbeitet sein. In diesem Fall kann auf die Führungsansätze 32 in dem Gehäuse 1 des Sensors verzichtet werden. Es wurde schon erläutert, daß die Befestigung des Sensorgehäuses 1 mittels der Befestigungspunkte 35 bis 38 zentriert geschehen sollte.

Es ist allerdings auch möglich, die Adapterscheibe 17 wegzulassen, wenn man dafür sorgt, daß das Sensorgehäuse 1 beispielsweise durch ein geeignetes gesondertes Lager im Abstand gegenüber der Lenkspindel 2 gesichert ist. Es ergibt sich insofern eine Konstruktion ähnlich der in Figur 4 gezeigten. Weiterhin muß in diesem Fall dafür gesorgt werden, daß das Sensorgehäuse 1 in Axialrichtung unter Vorspannung gegen das Gehäuse des Kipplagerbocks 8 gehalten wird, was wiederum beispielsweise durch eine in Figur 4 gezeigte Feder 10 bzw. mehrere dieser Federn auf den Kreisumfang der Gehäuse verteilt geschehen kann. Weiterhin können bei den beschriebenen Nut-Zapfverbindungen jeweils Nut und Zapfen der zueinander gehörenden Teile vertauscht werden, ohne daß sich besondere Schwierigkeiten ergeben.

Ein Vorteil der Erfindung, insbesondere hinsichtlich der Ausführungsform nach Figur 4 und der Weiterbildungen hierzu gemäß Figur 6 bis 9 besteht darin, daß auch hinsichtlich der Längsachse der Lenkspindel 2 ein gewisser Toleranzausgleich stattfinden kann, soweit hierdurch die Drehfestigkeit des Systems nicht gestört wird.

## Patentansprüche

1. Befestigung eines Lenkwinkelsensors (LWS) in einem Fahrzeug mit einer Lenksäule und einer darin drehbar gelagerten Lenkspindel (2), wobei ein Sensorgehäuse (1) im Bereich der Lenkspindellagerung (6) drehfest gehalten ist, **dadurch gekennzeichnet, daß** ein Mitnehmer (4) zum Antrieb eines im Sensorgehäuse (1) drehbar gelagerten Meßelementes gegenüber der Lenkspindel (2) und bevorzugt an dieser fixiert ist und daß das Sensorgehäuse (1) in einer Querebene (x-y-Ebene) zu einer Rotationsachse (Z) der Lenkspindel (2) bewegbar angeordnet ist.

2. Befestigungsvorrichtung nach Anspruch 1, **dadurch gekennzeichnet, daß** die Lenkspindel (2) in der Lenksäule mittels eines Rollenlagers (6), insbesondere Kugellagers, drehbar gelagert ist und daß das Sensorgehäuse (1) an einer äußeren Lagerschale des Rollenlagers (6) befestigt ist.

3. Befestigungsvorrichtung nach Anspruch 2, **dadurch gekennzeichnet, daß** die Lenksäule schwenkbar ausgebildet ist und einen Kipplagerbock (8) aufweist, daß das Rollenlager (6) zwischen Kipplagerbock (8) und einem Lenkrad an der Lenkspindel (2) angreift und daß, vorzugsweise zwischen einem an der äußeren Lagerschale angreifenden Befestigungselement (3) für das Sensorgehäuse (1) und dem Abstützbereich der äußeren Lagerschale im Kipplagerbock (8), ein elastischer Toleranzausgleichsring (7), insbesondere aus Gummi, vorgesehen ist.

4. Befestigungsvorrichtung nach einem der vorangegangenen Ansprüche, **dadurch gekennzeichnet, daß** das Rollenlager (6) kippsteif aufgebaut ist.

5. Befestigung nach einem der vorangegangenen Ansprüche, **dadurch gekennzeichnet, daß** das Sensorgehäuse (1) mit der äußeren Lagerschale des Rollenlagers (6) mittels des Befestigungselementes (3) verbunden ist, und daß das Befestigungselement (3) durch zumindest ein Winkelelement gebildet ist.

6. Befestigung nach einem der vorangegangenen Ansprüche, **dadurch gekennzeichnet, daß** das Befestigungselement (3) eine im wesentlichen zylinderförmige Wand besitzt, die an der äußeren Lagerschale des Rollenlagers (6) angreift, wobei die Wand mit mindestens einem sich in radialer Richtung erstreckenden Vorsprung (31) verbunden ist, an dem das Sensorgehäuse (1) befestigbar ist.

7. Befestigung nach einem der vorangegangenen Ansprüche, **dadurch gekennzeichnet, daß** das Sensorgehäuse (1) gegenüber dem Kipplagerbock (8) drehfest angeordnet ist.

8. Befestigung nach Anspruch 7 oder einem der vorangegangenen Ansprüche, **dadurch gekennzeichnet, daß** das Sensorgehäuse (1) gegenüber der Lenkspindel (2) über ein Drehlager (14), vorzugsweise Wälzlager, abgestützt ist und mittels eines Halteelements (10) in axialer Richtung gegenüber dem Kipplagerbock (8) gesichert ist.

9. Befestigung nach Anspruch 8, **dadurch gekennzeichnet, daß** das Halteelement durch eine Feder (10) gebildet ist, welche auf das Sensorgehäuse (1) eine axial zum Kipplagerbock (8) gerichtete Kraft ausübt.

10. Befestigung nach einem der Ansprüche 7 bis 9, **dadurch gekennzeichnet, daß** das Sensorgehäuse (1) durch eine Vorsprung-Nut-Verbindung gegenüber dem Kipplagerbock (8) in einer ersten Richtung (x-Richtung) radial beweglich in der Querebene (x-y-Ebene) der Lenkspindel (2) ausgestaltet ist.

11. Betestigung nach einem der Ansprüche 7 bis 10, **dadurch gekennzeichnet, daß** die Verschiebung mittels einer Adapterscheibe (17) erfolgt, die mit dem Sensorgehäuse (1) verbunden und gegenüber dem Kipplagerbock (8) verschiebbar angeordnet ist.

12. Befestigung nach Anspruch 11, **dadurch gekennzeichnet, daß** das Sensorgahäuse (1) gegen die Adapterscheibe (17) in einer zweiten Richtung (y-Richtung) in der Querebene (x-y-Ebene) verschiebbar angeordnet ist, wobei die erste Richtung (x-Richtung) und die zweite Richtung (y-Richtung) in der Ebene senkrecht zueinander stehen.

## Claims

1. Attachment of a steering angle sensor in a vehicle comprising a steering column and a steering spindle (2) pivoted therein, with a sensor housing (1) being held non-rotatably in the area of the steering spindle mounting support (6),
**characterized in that** an entraining member (4) for driving a measuring element that is pivoted in the sensor housing (1) is fixed in relation to the steering spindle (2), and preferably at the steering spindle, and **in that** the sensor housing (1) is arranged in a transverse plane (x-y plane) so as to be movable relative to an axis of rotation (Z) of the steering spindle (2).

2. Attaching device as claimed in claim 1,
**characterized in that** the steering spindle (2) is pivoted in the steering column by means of a roller bearing (6), in particular a ball bearing, and **in that** the sensor housing (1) is secured to the outside bearing bush of the roller bearing (6).

3. Attaching device as claimed in claim 2,
**characterized in that** the steering column is tiltably arranged and includes a swing support (8), **in that** the roller bearing (6) makes catch at the steering spindle (2) between the swing support (8) and a steering wheel, and **in that** an elastic tolerance compensating ring (7), especially made of rubber, is provided preferably between an attaching element (3) for the sensor housing (1) which makes catch at the outside bearing bush and the supporting area of the outside bearing bush in the swing support (8).

4. Attaching device as claimed in any one of the preceding claims,
**characterized in that** the roller bearing (6) has a design resistant to tilting.

5. Attachment as claimed in any one of the preceding claims,
**characterized in that** the sensor housing (1) is connected to the outside bearing bush of the roller bearing (6) by means of the attaching element (3), and **in that** the attaching element (3) is configured as at least one angular element.

6. Attachment as claimed in any one of the preceding claims,
**characterized in that** the attaching element (3) has a generally cylinder-shaped wall which makes catch at the outside bush of the roller bearing (6), the said wall being connected to at least one projection (31) that extends in a radial direction and to which the sensor housing (1) can be fastened.

7. Attachment as claimed in any one of the preceding claims,
**characterized in that** the sensor housing (1) is non-rotatable in relation to the swing support (8).

8. Attachment as claimed in claim 7 or any one of the preceding claims,
**characterized in that** the sensor housing (1) is supported relative to the steering spindle (2) by way of a pivot bearing (14), preferably an antifriction bearing, and is secured in an axial direction in relation to the swing support (8) by means of a holding element (10).

9. Attachment as claimed in claim 8,
**characterized in that** the holding element is a spring (10) which applies a force to the sensor housing (1) that is directed axially to the swing support (8).

10. Attachment as claimed in any one of claims 7 to 9,
**characterized in that** the sensor housing (1) is configured so as to be radially movable relative to the swing support (8) by a projection-and-groove connection in a first direction (x-direction) in the transverse plane (x-y plane) of the steering spindle (2).

11. Attachment as claimed in any one of claims 7 to 10,
**characterized in that** the displacement takes place by means of an adapter disc (17) which is connected to the sensor housing (1) and is displaceable in relation to the swing support (8).

12. Attachment as claimed in claim 11,
**characterized in that** the sensor housing (1) is displaceable in relation to the adapter disc (17) in a second direction (y-direction) in the transverse plane (x-y plane), and the first direction (x-direction) and the second direction (y-direction) are vertical to one another in the plane.

## Revendications

1. Fixation d'un capteur d'angle de direction (LWS) dans un véhicule avec une colonne de direction et un arbre de direction (2) monté tournant à l'intérieur de celle-ci, un boîtier (1) du capteur étant maintenu solidairement en rotation dans la zone du support (6) de l'arbre de direction, **caractérisée en ce qu'**un entraîneur (4), pour l'entraînement d'un élément de mesure monté tournant dans le boîtier (1) du capteur, est fixé par rapport à l'arbre de direction (2) et de préférence sur celui-ci, et **en ce que** le boîtier (1) du capteur est disposé mobile dans un plan transversal (plan x-y) par rapport à un axe de rotation (Z) de l'arbre de direction (2).

2. Dispositif de fixation selon la revendication 1, **caractérisé en ce que** l'arbre de direction (2) est monté tournant dans la colonne de direction, au moyen d'un palier à rouleaux (6), en particulier un roulement à billes, et **en ce que** le boîtier (1) du capteur est fixé sur une coquille de coussinet extérieure du palier à rouleaux (6).

3. Dispositif de fixation selon la revendication 2, **caractérisé en ce que** la colonne de direction est réalisée de manière à pouvoir pivoter et comporte un support de basculement (8), **en ce que** le palier à rouleaux (6) agit entre le support de basculement (8) et un volant sur l'arbre de direction (2), et **en ce qu'**une bague de compensation des tolérances (7) élastique, en particulier en caoutchouc, est prévue de préférence entre un élément de fixation (3), agissant sur la coquille de coussinet extérieure, pour le boîtier (1) du capteur, et la zone d'appui de la coquille de coussinet extérieure dans le support de basculement (8).

4. Dispositif de fixation selon l'une des revendications précédentes, **caractérisé en ce que** le palier à rouleaux (6) est d'une construction rigide au basculement.

5. Fixation selon l'une des revendications précédentes, **caractérisée en ce que** le boîtier (1) du capteur est relié à la coquille de coussinet extérieure du palier à rouleaux (6), au moyen de l'élément de fixation (3), et **en ce que** l'élément de fixation (3) est formé par au moins un élément en cornière.

6. Fixation selon l'une des revendications précédentes, **caractérisée en ce que** l'élément de fixation (3) possède une paroi sensiblement cylindrique qui agit sur la coquille de coussinet extérieure du palier à rouleaux (6), la paroi étant reliée à au moins une saillie (31) s'étendant dans la direction radiale, à laquelle peut être fixé le boîtier (1) du capteur.

7. Fixation selon l'une des revendications précédentes, **caractérisée en ce que** le boîtier (1) du capteur est disposé de manière à ne pouvoir tourner par rapport au support de basculement (8).

8. Fixation selon la revendication 7, ou l'une des revendications précédentes, **caractérisée en ce que** le boîtier (1) du capteur est soutenu par rapport à l'arbre de direction (2), par l'intermédiaire d'un palier tournant (14), de préférence un palier de roulement et est bloqué, au moyen d'un élément de maintien (10), dans la direction axiale, par rapport au support de basculement (8).

9. Fixation selon la revendication 8, **caractérisée en ce que** l'élément de maintien est formé par un ressort (10) qui exerce sur le boîtier (1) du capteur une force dirigée axialement par rapport au support de basculement (8).

10. Fixation selon l'une des revendications 7 à 9, **caractérisée en ce que** le boîtier (1) du capteur est conçu de manière à pouvoir se déplacer radialement dans le plan transversal (plan x-y) de l'arbre de direction (2), par rapport au support de basculement (8), dans une première direction (direction x), grâce à une liaison à rainure et languette.

11. Fixation selon l'une des revendications 7 à 10, **caractérisée en ce que** le coulissement s'effectue au moyen d'un disque d'adaptation (17) qui est relié au boîtier (1) du capteur et qui est disposé de manière à pouvoir coulisser par rapport au support de basculement (8).

12. Fixation selon la revendication 11, **caractérisée en ce que** le boîtier (1) du capteur est disposé de manière à pouvoir coulisser, contre le disque d'adaptation (17) dans une deuxième direction (y), dans le plan transversal (plan x-y), la première direction (direction x) et la deuxième direction (direction y) étant perpendiculaires l'une à l'autre dans le plan.
